# EUROPÄISCHE PATENTSCHRIFT

(11) **EP 3 917 804 B1**
(45) Veröffentlichungstag und Bekanntmachung des Hinweises auf die Patenterteilung: **20.03.2024**
(21) Anmeldenummer: 20704622.8
(22) Anmeldetag: 30.01.2020
(51) Int. Cl.: B60R 1/062

(54) **SICHTEINSTELLMECHANISMUS**
VISION ADJUSTING MECHANISM
MÉCANISME DE RÉGLAGE DE LA VUE

(30) Priorität: 31.01.2019 DE 202019100579 U
(43) Veröffentlichungstag der Anmeldung: 08.12.2021
(73) Patentinhaber: MCi (Mirror Controls International) Netherlands B.V., 3447 GK Woerden (NL)
(72) Erfinder: VAN STIPHOUT, Paulus Gerardus Maria, 3447 GK Woerden (NL); BEKKER, Anne Catharina Martha, 3447 GK Woerden (NL); LORIER, Alex, 3447 GK Woerden (NL); JANSEN, Tom Adriaan, 3447 GK Woerden (NL)
(74) Vertreter: V.O.
(86) Internationale Anmeldenummer: PCT/NL2020/050050
(87) Internationale Veröffentlichungsnummer: WO 2020/159367

(56) Entgegenhaltungen:
- US-A- 4 401 289
- US-A- 5 629 810
- US-A1- 2002 149 865

## Beschreibung

Vorliegende Erfindung betrifft einen Sichteinstellmechanismus, insbesondere für einen Seitenspiegel oder eine Kameraunit eines Motorfahrzeugs, umfassend ein erstes Teil, insbesondere ein Basisteil, und ein relativ dazu verschwenkbar angeordnetes zweites Teil, insbesondere ein Spiegelhalterteil, wobei das erste Teil eine Mulde aufweist, in die ein zu dieser Mulde wenigstens abschnittsweise komplementäres Kopfteil unter Bildung wenigstens eines Klemmspaltes zwischen Mulde und Kopfteil einsetzbar und relativ zum ersten Teil über ein Fixiermittel fixierbar ist, und wobei das zweite Teil wenigstens ein Klemmteil aufweist, das wenigstens abschnittsweise komplementär zum Klemmspalt ausgebildet und in diesem derart anordbar ist, dass das zweite Teil am ersten Teil relativ zu diesem verschwenkbar befestigt ist.

Solche Sichteinstellmechanismen sind aus dem Stand der Technik bekannt. Die schwenkbare Anordnung der zwei Teile zueinander erlaubt dabei beispielsweise die Einstellung eines Spiegels oder einer Kamera, um einem Fahrzeugnutzer einen optimalen Sichtwinkel zu gewährleisten. Sie können, beispielsweise zur Einstellung des Schwenkwinkels zwischen dem ersten Teil und dem zweiten Teil, manuell, mitunter aber auch elektrisch verstellbar ausgebildet werden. Hergestellt werden die Sichteinstellmechanismen meist aus Kunststoffmaterial. Eine mögliche Ausführungsform eines solchen Sichteinstellmechanismus zeigt beispielsweise die US 2011/0051271 A1.

Die US 5 629 810 A offenbart eine Außenspiegelbaugruppe für Kraftfahrzeuge, bestehend aus einem Spiegel, der an Ort und Stelle gehalten und durch einen handbetätigten Einstellmechanismus eingestellt wird, der seinerseits an einer Halterung befestigt ist. Die Halterung ist an einer Schale befestigt. Der Einstellmechanismus umfasst eine Baugruppe mit seitlich montierten Komponenten. Die Komponenten sind eine Basis, eine Schwenkschale, eine Hülse, ein Halter, eine Feder und ein Federhalter. Der Einstellmechanismus hat eine teilweise kugelförmige Basis mit einem sich zentral davon erstreckenden Schaft zum komprimierbaren Montieren einer Schwenkschale darauf. Der Schaft erstreckt sich zwischen der Innenseite der Basis und der Rückseite des Spiegelgehäuses.

Die US 4 401 289 A offenbart eine verstellbare Spiegelstabilisierungshalterung, die u.a. in elektrisch verstellbaren Automobilspiegeln verwendet werden kann, und bei der die feste Seite der Halterung aus dem Spiegelgehäuse herausragt, um kugelförmig konzentrische, ineinander geschachtelte Flächen zu tragen, die ein bewegliche Element dazwischen einschließen. Die Halterung umfasst eine Verkeileinrichtung und eine Drehzapfeneinrichtung, um die Stabilität der Halterung unter begrenzter Bewegungsfähigkeit zu gewährleisten. Zwischen einigen der kugelförmigen Flächen ist ein spezielles Gleitkissen vorgesehen. Die Montage der Komponenten erfolgt über ein druckbelastetes Federelement.

Die US 2002/149865 offenbart einen Mechanismus zur Einstellung eines Spiegelwinkels, der durch das Ineinandergreifen von Verriegelungselementen eines Stützzapfens, die durch Öffnungen, die in einem zweiten Halbkugelabschnitt eines inneren Spiegelhalters vorgesehen sind, eingeführt wurden, mit einem Gehäusedrehzapfen zusammengesetzt wird. Mehrere elastische Platten auf dem Stützzapfen werden gegen den zweiten Halbkugelabschnitt zusammengedrückt, so dass der zweite Halbkugelabschnitt zwischen den mehreren elastischen Platten und einem ersten Halbkugelabschnitt gehalten wird, der an dem Gehäusedrehzapfen vorgesehen ist.

Je nach Anwendungsgebiet sind solche Mechanismen externen Kräften unterworfen, die insbesondere eine ungewollte Verstellung zwischen dem ersten Teil und dem zweiten Teil bewirken können. Dies kann beispielsweise durch den Fahrbetrieb des Motorfahrzeugs geschehen, an dem der Sichteinstellmechanismus montiert ist. Um ein ungewolltes Verstellen des ersten Teils relativ zum zweiten Teil zu verhindern, ist die Verbindung zwischen erstem und zweitem Teil meist mit entsprechenden Sicherungsmitteln, beispielsweise Vorspannelementen, Reibschlusselementen etc., versehen, die eine Verstellung zwischen erstem und zweitem Teil nur nach Überwindung einer definierten Kraftschwelle erlauben. Insbesondere bei den aus Kunststoffmaterial hergestellten Mechanismen stellt dies jedoch ein Problem dar, da Kunststoffmaterial u.a. aufgrund der materialinhärenten Schrumpfungen und Kriechverhaltens aufgebrachten Spannungen ausweicht, wodurch sich so mitunter die zur Verstellung des zweiten Teils relativ zum ersten Teil geforderte Kraftschwelle verändert. Neben der Veränderung dieser Kraftschwelle hat man zudem beobachtet, dass es mit der Zeit, zu einer Verlagerung der Schwenkachsen des Sichteinstellmechanismuses kommt, wodurch eine reproduzierbare Verschwenkung des Sichteinstellmechanismuses nicht mehr gewährleistet ist.

Aufgabe der Erfindung ist es daher, einen Mechanismus anzubieten, der einfach und kostengünstig herstellbar ist und der insbesondere die oben genannten Probleme nicht aufweist.

Diese Aufgabe wird durch einen Sichteinstellmechanismus gemäß Anspruch 1 und eine Spiegeleinheit gemäß Anspruch 18 gelöst.

Sichteinstellmechanismus, umfassend ein erstes Teil, insbesondere ein Basisteil, und ein relativ dazu verschwenkbar angeordnetes zweites Teil, insbesondere ein Spiegelhalterteil, wobei das erste Teil eine Mulde aufweist, in die ein zu dieser Mulde wenigstens abschnittsweise komplementäres Kopfteil des Sichteinstellmechanismus unter Bildung wenigstens eines Klemmspaltes zwischen Mulde und Kopfteil einsetzbar und relativ zum ersten Teil über ein Fixiermittel des Sichteinstellmechanismus fixierbar ist, und das zweite Teil wenigstens ein Klemmteil aufweist, das wenigstens abschnittsweise komplementär zum Klemmspalt ausgebildet und in diesem derart anordbar ist, dass das zweite Teil am ersten Teil relativ zu diesem verschwenkbar befestigt ist, das Fixiermittel derart ausgebildet ist, dass es das Kopfteil in Richtung des ersten Teils und insbesondere der Mulde vorspannt, wobei das Fixiermittel eine Rotationssicherung derart bildet, dass das zweite Teil relativ zum ersten Teil um eine Rotationsachse Av orthogonal zu wenigstens einer Schwenkachse As, um die das zweite Teil relativ zum zweiten Teil verschwenkbar ist, rotationsfixiert ist, wobei das Fixiermittel wenigstens ein Rotationfixierelement aufweist, das außerhalb dieser Rotationsachse Av gelagert ist, wobei das Fixiermittel insbesondere zwischen dem ersten Teil und dem Kopfteil verläuft und das zweite Teil durchdringt, wobei das Fixiermittel ein Bügelelement aufweist, mit wenigstens zwei Bügelarmen und einem Bügelkopf, wobei an den Bügelarmen wenigstens ein Fixierelement ausgebildet ist, das mit wenigstens einem Gegenfixierelement am ersten Teil festlegbar ist und/oder wobei der Bügelkopf am Kopfteil festlegbar ist, und wobei
wenigstens ein Teil des Bügelelementes, insbesondere ein Bügelarm das Rotationfixierelement bildet.

Weiter wird diese Aufgabe gelöst durch eine Spiegeleinheit und insbesondere einen Seitenspiegel für ein Motorfahrzeug, umfassend einen Sichteinstellmechanismus, wie er hier genannt ist, wobei am zweiten Teil wenigstens ein Spiegelelement oder eine Kameraunit angeordnet ist.

Kern der Erfindung ist die Ausbildung einer Mulde am ersten Teil, was insbesondere bei der Bereitstellung des Sichteinstellmechanismus aus einem Kunststoffmaterial sehr einfach und kostengünstig möglich ist, und das Anordnen wenigstens des einen Klemmteils und des Kopfteils in einer gestapelten Anordnung. Die Ausbildung der Mulde erlaubt u.a eine sehr platzsparende, und insbesondere in Vertikalrichtung des Mechanismus, also in einer Richtung orthogonal zur geplanten Verschwenkebene des Spiegels, platzsparende Ausbildung. Durch die Bereitstellung eines Mechanismus mit einer sehr geringen Anzahl an Bauteilen, nämlich dem ersten Teil, dem zweiten Teil, dem Kopfteil und dem Fixiermittel, ist darüber hinaus eine sehr kostengünstige Herstellung bei vergleichsweise sehr einfacher Montierbarkeit gewährleistet, wobei der resultierende Sichteinstellmechanismus insbesondere gegen Materialschrumpfungen unempfindlich ist.

Der Sichteinstellmechanismus kann dabei so ausgebildet sein, dass das zweite Teil mit seinem Klemmteil in die Mulde des ersten Teils eingesetzt, dann das Kopfteil unter Bildung des Klemmspalts und Einklemmen des Klemmteils darauf aufgesetzt und das Kopfteil und das erste Teil durch das Fixiermittel miteinander verbunden werden können. Ein Separieren des Sichteinstellmechanismus ist dann optional in umgekehrter Reihenfolge möglich, vorausgesetzt, dass Fixiermittel wird lösbar ausgebildet.

Das Fixiermittel ist derart ausgebildet, dass es das Kopfteil in Richtung des ersten Teils, und insbesondere der Mulde, vorspannt. Auf diese Weise kann insbesondere Materialschrumpfungen und Relaxationen entgegengewirkt werden. Über die Kraft, mit der das Kopfteil in die Mulde gedrückt bzw. das Klemmteil im Klemmspalt eingeklemmt wird, kann die Verschwenkkraft zwischen erstem und zweitem Teil eingestellt werden. Die Kraft wird dabei vorzugsweise so gewählt, dass ein ungewolltes Verstellen des Sichteinstellmechanismus, und insbesondere Verschwenken zwischen erstem und zweitem Teil, während des Normalbetriebs des Sichteinstellmechanismus unterbunden wird. Erst bei Überschreiten einer vordefinierten Einstellkraft erfolgt ein Verschwenken zwischen erstem und zweitem Teil. Da, wie erwähnt, das Fixiermittel eine Rotationssicherung derart ausbildet, dass das zweite Teil relativ zum ersten Teil rotationsfixiert ist und um eine Achse Av orthogonal zu wenigstens einer Schwenkachse As, um die das zweite Teil relativ zum ersten Teil verschwenkbar ist, rotationsfixiert ist, erhält man einen Sichteinstellmechanismus, der auch nach langer Benutzung und bei einfacher Komplettierbarkeit eine zuverlässige und reproduzierbare Verschwenkbarkeit des zweiten Teiles relativ zum ersten Teil sicher stellt.

Optional ist das Halterteil als ein Spiegelhalterteil ausgebildet.

Optional ist das Klemmteil unter Reibschluss im Klemmspalt angeordnet und insbesondere im Klemmspalt gleitend bewegbar angeordnet. Über den Reibschluss bzw. die resultierende Reibungskraft kann die Verstellkraft des Sichteinstellmechanismus definiert werden. Der Reibschluss verhindert dabei insbesondere ein ungewolltes Verstellen des Sichteinstellmechanismus bzw. Verschwenken aus der Verschwenkebene. Bei einem Verschwenken des ersten Teils relativ zum zweiten Teil gleitet das Klemmteil optional im Klemmspalt von einer Position zu einer anderen Position.

Es ist möglich, den Sichteinstellmechanismus und insbesondere wenigstens eins der den Sichteinstellmechanismus bildenden Teile, nämlich das erste Teil, das zweite Teil, das Kopfteil und das Fixiermittel derart auszubilden, dass sich die Verschwenkkraft bzw. Kraftschwelle, die es zum Verstellen des ersten Teils relativ zum zweiten Teil zu überwinden gilt, in Abhängigkeit des Schwenkwinkels ändert.

So kann beispielsweise der Sichteinstellmechanismus derart ausgebildet werden, dass sich die Kraftschwelle mit zunehmendem Schwenkwinkel erhöht oder abnimmt. Dies ist beispielsweise durch eine Anpassung der Formen der Mulde und/oder des Klemmteils möglich. Hier wird im Folgenden noch im Detail eingegangen.

Optional bilden das erste Teil und das Kopfteil, sobald sie über das Fixiermittel fixiert sind, eine ortsfest miteinander verbundene Einheit. Das Resultat ist ein Klemmspalt, in dem das Klemmteil sicher geführt wird. Es ist denkbar, dass das Kopfteil relativ zum ersten Teil um wenigstens eine Achse ortsfest fixiert ist. So ist es beispielsweise denkbar, dass geringe Verschwenkungen des Kopfteils zum ersten Teil insbesondere in einer Spiegelverschwenkebene möglich sind und dass eine Torsion, also um eine Achse senkrecht zu dieser Spiegelebene, unterbunden wird. Hier kann eine geeignete Rotationssicherung zum Einsatz kommen, wie es im Folgenden noch im Detail beschrieben werden wird.

Optional ist das Kopfteil entlang einer Einsetzrichtung R_{E}, die insbesondere orthogonal zur Verschwenkebene des Sichteinstellmechanismus verläuft und/oder orthogonal zu einer Hauptebene E_{H} der Mulde, in die Mulde einsetzbar ist. Die Hauptebene E_{H} ist vorzugsweise parallel zur Verschwenkebene ausgebildet. Die Verschwenkebene kann coplanar zur Spiegelebene ausgebildet sein. Die Hauptebene E_{H} ist vorzugsweise die Haupterstreckungsebene des Sichteinstellmechanismus. Die Hauptebene E_{H} ist optional die Ebene, in der die Schwenkachsen des Mechanismus verlaufen und insbesondere die Verschwenkebene. Optional sind wenigstens zwei Schwenkachsen vorgesehen, um die der Sichteinstellmechanismus bzw. das erste Teil relativ zum zweiten Teil verschwenkt werden kann. Die Einsetzrichtung ist dabei optional koaxial zur Hauptvertikalachse Av des Sichteinstellmechanismus ausgebildet.

Optional weist die Mulde eine Einsetzöffnung auf, über die das Kopfteil entlang einer Einsetzrichtung R_{E} in die Mulde einsetzbar und dort über das Fixiermittel insbesondere gegen ein Entnehmen entgegen der Einsetzrichtung R_{E} fixierbar ist und/oder nach dem Lösen des Fixiermittels aus dieser entnehmbar ist. Entlang dieser Einsetzöffnung kann optional auch das Klemmteil in die Mulde eingesetzt werden. Optional ist der Sichteinstellmechanismus derart ausgebildet, dass das Klemmteil entlang der Einsetzöffnung in die Mulde und danach das Kopfteil entlang der Einsetzrichtung auf das Klemmteil und ebenfalls in die Mulde einführbar ist. Es bildet sich so eine gestapelte Anordnung zwischen erstem Teil, zweitem Teil und Kopfteil.

Optional ist das zweite Teil um wenigstens eine Schwenkachse As, die orthogonal zu einer Einsetzrichtung R_{E} und insbesondere der zuvor genannten Einsetzrichtung R_{E} verläuft, und insbesondere entlang derer das Kopfteil in die Mulde einsetzbar ist, relativ zum ersten Teil verschwenkbar. Die Einsetzrichtung ist optional orthogonal zu wenigstens einer Schwenkachse As zwischen zweitem und erstem Teil ausgebildet.

Optional sind die Mulde und das Kopfteil derart komplementär zueinander ausgebildet, dass sie unter Zwischenlagern des Klemmteils mit diesem eine Kugelkopflagerung bilden.

Optional weist die Mulde wenigstens abschnittsweise eine Muldenwandung auf, mit einer geometrischen Form, die der geometrischen Form der Wandung einer Kugelschicht einer ersten Kugel oder einer Schicht eines dergleichen rotationssymmetrischen ersten Volumenkörpers entspricht. Die Rotationssymmetrie ist hier optional um eine Rotationsachse orthogonal zur Schwenkachse As und insbesondere zur Vertikalachse, die optional parallel zur Einsetzrichtung En verläuft, definiert. Es ist auch denkbar, dass die Rotationsachse optional orthogonal zur Verschwenkebene und/oder zur Hauptebene E_{H} verläuft. Zuvor genannter rotationssymmetrischer Volumenkörper kann beispielsweise einen Volumenkörper sein, erhalten durch die Rotation einer Parabel, Kettenlinie oder dergleichen Kurve um eine Achse durch ihren Scheitelpunkt. Eine Schicht des Körpers bildet optional eine Wannen- oder Tassenform insbesondere inkl. dem dazugehörigen Boden der Tasse bzw. Wanne. Optional ist, insbesondere am oberen Kragen und/oder am unteren Kragen der Schicht wenigstens eine Öffnung vorgesehen. Eine solche Öffnung kann beispielsweise die zuvor beschriebene Einsetzöffnung sein.

Die Muldenwandung kann sich über den Umfang der Schicht und insbesondere in Bezug auf eine Rotationsachse, um 360° verlaufend erstrecken, also insbesondere eine volle Ringform aufweisen. Es ist aber auch möglich, die Muldenwandung als wenigstens ein Segment und insbesondere in Form wenigstens eines Muldenwandungsabschnittes, verlaufend um einen Umlaufwinkel < 360° auszubilden. Grundsätzlich trifft dies auf eine Mulde mit einer rotationssymmetrischen Außenform bzw. Wandung, also einem Ring etc. zu, es ist aber auch auf eine Mulde mit nicht rotationssymmetrischer Wandungsform, beispielsweise in Form einer Ellipse oder einer anderen Form anwendbar.

Optional sind wenigstens ein, vorzugsweise zwei Muldenwandungsabschnitte vorgesehen, die optional derart ausgebildet sind, dass sie einen Einsetzraum für das Kopfteil definieren, sodass zwischen Muldenwandung und Kopfteil der Klemmspalt gebildet wird.

Optional weist das Kopfteil wenigstens abschnittsweise eine Kopfteilwandung auf, mit einer geometrischen Form, die der geometrischen Form der Wandung einer Kugelschicht einer zweiten Kugel oder der Schicht eines dergleichen rotationssymmetrischen zweiten Körperkörpers entspricht, und insbesondere einer zweiten Kugel oder eines dergleichen rotationssymmetrischen zweiten Volumenkörpers, der kleiner ist als die erste Kugel, oder der rotationssymmetrische erste Volumenkörper, wie er zuvor beschrieben wurde. Für alle Sonderformen einer solchen Kopfteilwandung gilt das zuvor unter Bezug auf die Muldenwandung Beschriebene optional identisch bzw. vergleichbar. So kann u.a. das Kopfteil auch wenigstens ein Kopfteilsegment aufweisen etc.

Die Kopfteilwandung und die Muldenwandung sind optional komplementär zueinander ausgebildet, sodass sie relativ zueinander stapelbar sind. Auf diese Weise kann das Kopfteil in die Mulde eingesetzt werden, wobei zwischen Kopfteil und Mulde bzw. Kopfteilwandung und Muldenwandung der Klemmspalt entsteht. Das Kopfteil und die Mulde bzw. die Kopfteilwandung und die Muldenwandung weisen optional wenigstens abschnittsweise dieselbe geometrische Form auf, allerdings mit unterschiedlicher Größe auf, wobei optional das Kopfteil kleiner ist als die Mulde. Die zuvor erwähnte zweite Kugel bzw. der zweite Volumenkörper sind dabei optional so ausgebildet, dass sie um den Betrag des Klemmspalts kleiner ausgebildet sind als die erste Kugel bzw. der erste Volumenkörper. Auch hier gilt das zuvor in Bezug auf die Muldenwandung und die dort erwähnten Volumenkörper genannte identisch.

Optional weist das Klemmteil wenigstens abschnittsweise eine Klemmteilwandung auf, mit einer geometrischen Form, die wenigstens abschnittsweise der geometrischen Form der Wandung einer Kugelschicht einer dritten Kugel oder einer Schicht eines dergleichen rotationsymmetrischen dritten Volumenkörpers entspricht, und insbesondere einer dritten Kugel oder eines dergleichen rotationssymmetrischen dritten Volumenkörpers, der kleiner ist als die erste Kugel bzw. der rotationssymmetrische erste Volumenkörper, wie er in Bezug auf die Muldenwandung definiert wurde und/oder größer ist als die zweite Kugel bzw. der rotationssymmetrische zweite Volumenkörper, wie er in Bezug auf die Klemmteilwandung definiert wurde. Auch hier gilt das zuvor in Bezug auf die Muldenwandung und die dort erwähnten Volumenkörper genannte identisch. Weiter gilt wieder optional, dass das Klemmteil bzw. die Klemmteilwandung so ausgebildet sind, dass das Klemmteil und die Mulde ineinander stapelbar sind und/oder das Klemmteil und das Kopfteil ineinander stapelbar ausgebildet sind. Wie eingangs bereits erwähnt, kann über die Form der Mulde und/oder des Klemmteils und/oder des Kopfteils die Reibschlusswirkung der einzelnen Teile untereinander definiert werden. Auch kann die Verstellkraft zwischen erstem und zweitem Teil angepasst werden. So kann beispielsweise bei einer Querschnittsform mit sich über den Schwenkwinkel des Sichteinstellmechanismus veränderndem Steigungswinkel der Muldenwandung u8nd/oder des Klemmteils und/oder des Kopfteils Einfluss auf die resultierenden Reibungskräfte genommen werden. Optional weist die Mulde und/oder das Klemmteil und/oder das Kopfteil wenigstens abschnittsweise eine geometrische Form auf, deren Steigungswinkel in Vertikalrichtung nach unten, also in Richtung des Muldenbodens, abnimmt. Eine solche Form kann beispielsweise eine Parabel oder dergleichen Kettenlinienform sein.

Optional sind das Kopfteil und die Mulde und/oder das Kopfteil und das Klemmteil und/oder die Mulde und das Klemmteil wenigstens in Bezug auf ihre jeweils gegenüberliegenden Wandungen wenigstens abschnittsweise als Rotationskörper mit einer gemeinsamen Rotationskörperachse Av ausgebildet.

Optional weist das Klemmteil wenigstens ein Reibelement auf, das insbesondere in Form einer Verdichtung und/oder eines Vorsprungs insbesondere an der Klemmteilwandung des Klemmteils vorgesehen ist und mit einer Muldenwandung und/oder einer Kopfteilwandung im Klemmspalt in Reibschluss steht. Ein solches Reibelement kann beispielsweise an einem freien Ende des Klemmteils ausgebildet sein. Das Reibelement kann beispielsweise an einem freien Kragen eines entsprechend ausgebildeten Klemmteils ausgebildet sein. Auch ist die Anordnung einer Mehrzahl an Reibelementen denkbar. Es ist denkbar, Reibelemente so auszubilden, dass sie erst bei bestimmten Schwenkwinkeln in Reibschluss treten, um so beispielsweise über den Verlauf des Schwenkwinkels unterschiedliche Reibkräfte zu definieren.

Das Reibelement ist optional integral mit dem Klemmteil ausgebildet. Weiter ist optional die Mulde integral mit dem ersten Teil ausgebildet. Optional ist auch das Klemmteil mit dem zweiten Teil ausgebildet. Optional weist das Klemmteil im Bereich der Einsatzöffnung für das Kopfteil einen Kragenbereich auf, an dem wenigstens ein Haltemittel zur Aufnahme wenigstens eines Spiegelelements ausgebildet ist. Dieses Haltemittel ist optional integral mit der Mulde ausgebildet. Optional steht das Klemmteil aus der Oberfläche und insbesondere aus der Unterseite des zweiten Teils hervor. Optional ist das Klemmteil als eine Mulde im zweiten Teil ausgebildet. Diese Mulde, im Folgenden auch Klemmteilmulde genannt, ist optional komplementär zur Mulde im ersten Teil ausgebildet, jedoch optional von kleinerer Abmessung, so dass sich zwischen beiden Mulden der Klemmspalt bildet. Auf die vorhergehende Passage zu den Wandungen, welche nicht vollumlaufend, sondern nur teilumlaufend ausgebildet sind wird in diesem Zusammenhang Bezug genommen. Auch die Mulde und/oder die Klemmteilmulde können als Segment ausgeführt sein, also eine Wandung aufweisen, die weniger als 360°umläuft. Optional ist auf der Oberseite des zweiten Teils wenigstens ein Spiegel anordbar. Optional ist auf der Oberseite ein Haltemittel zur Halterung des wenigstens einen Spiegels vorgesehen. Das Kopfteil ist optional komplementär zur Klemmteilmulde ausgeführt, so dass es vorzugsweise passgenau und/oder mit Reibschluss zur Klemmteilmuldenwandung und insbesondere zu dort vorgesehenen Reibelementen in die Klemmteilmulde eingefügt werden kann.

Optional weist das Fixiermittel wenigstens ein Federzugmittel auf, das unter Aufbringung einer gegenseitigen Vorspannung am ersten Teil und am Kopfteil festlegbar ist. Auf diese Weise kann eine Vorspannung zwischen erstem und zweitem Teil aufgebracht werden, die eine Klemmkraft auf das Klemmteil bewirkt, und insbesondere von etwaigen Relaxationen der Bauteilmaterialien von Kopfteil, Klemmteil und Mulde unabhängig ist. Das Kopfteil wird auf diese Weise in Richtung erstem Teil vorgespannt und so eine gleichbleibende Klemmkraft im Klemmspalt, wirkend auf das Klemmteil, erzeugt.

Das Fixiermittel verläuft insbesondere zwischen dem ersten Teil und dem Kopfteil. Zudem durchdringt das Fixiermittel das zweite Teil und insbesondere das Klemmteil. Je nach Ausbildung des Fixiermittels kann auf diese Weise eine Rotationssicherung erzielt werden, die eine Rotation des Klemmteils und somit des zweiten Teils relativ zum ersten Teil und/oder dem Kopfteil verhindert. Die Rotation bezieht sich hier optional auf eine Achse vertikal zur Verschwenkebene des Sichteinstellmechanismus. Die Rotation bezieht sich hier optional auf eine Rotationsachse um die das erste Teil, ohne montiertes Fixiermittel, relativ zum zweiten Teil rotierbar in der Mulde gelagert ist.

Zudem weist das Fixiermittel erfindungsgemäß wenigstens ein Rotationfixierelement auf, das außerhalb einer Rotationsachse Av, um die das erste Teil, ohne montiertes Fixiermittel relativ zum zweiten Teil rotierbar in der Mulde gelagert ist, bzw. der Vertikalachse Av gelagert ist und insbesondere in einem Abstand zu dieser Achse Av verläuft. Auf diese Weise kann das Fixierelement als Rotationssicherung fungieren. Optional umfasst das zweite Teil und insbesondere das Klemmteil einen Rotationsanschlag, gegen den das eine Rotationsicherung bildende Fixierelement und insbesondere das obige Rotationfixierelement rotationsfixierend ansteht, um eine Rotation des zweiten Teils relativ zum ersten Teil zu verhindern. Ein solcher Rotationsanschlag kann optional ein Schlitz, eine Öffnung oder ein dergleichen Durchlass sein, in den wenigstens ein Teil des Fixiermittels, bspw. das Rotationfixierelement einragt und/oder das das zweite Teil durchdringt.

Optional weist das Fixiermittel wenigstens ein Fixierelement auf, das an wenigstens einem Gegenfixierelement am ersten Teil und/oder Kopfteil festlegbar ist oder umgekehrt.

Zudem weist das Fixiermittel erfindungsgemäß ein Bügelelement auf, mit wenigstens zwei Bügelarmen und einem insbesondere zwischen den Bügelarmen ausgebildetem Bügelkopf, wobei insbesondere an Endbereichen der Bügelarme wenigstens ein Fixierelement ausgebildet ist, das an wenigstens einem Gegenfixierelement am ersten Teil festlegbar ist und/oder wobei der Bügelkopf am Kopfteil festlegbar ist. Ein Teil des Bügelelementes, insbesondere wenigstens ein Bügelarm bildet das Rotationfixierelement. Die Festlegung des Bügelkopfes am Kopfteil erfolgt optional ebenfalls über wenigstens ein Fixierelement und wenigstens ein Gegenfixierelement. Eine solche Anordnung kann beispielsweise ein Lager sein, in der der Bügelkopf eingelegt werden kann. Ein solches Lager kann beispielsweise auch ein Klemmlager sein, in der der Bügelkopf festklemmbar lagerbar ist. Die Fixierung des Bügelkopfes kann entlang wenigstens einer Achse erfolgen. So ist es beispielsweise denkbar, den Bügelkopf so am Kopfteil zu lagern, dass er entlang seiner Haupterstreckungsachse rotierbar und/oder verschiebbar, orthogonal dazu uns insbesondere senkrecht zur Verschwenkebene aber fixiert ist. Es ist denkbar, das Fixiermittel und insbesondere das als Bügelelement ausgebildete Fixiermittel derart auszubilden, dass es das Kopfteil umgreift und mit seinen Bügelarmen insbesondere unter Durchdringung des zweiten Teils in Richtung des ersten Teils weist und dort festlegbar ist. Durch das Umgreifen ist eine sichere Fixierung des Kopfteils gewährleistet.

Optional ist das Fixiermittel als Schnappmittel ausgebildet, das insbesondere werkzeuglos in einen fixierenden Schnappeingriff mit dem ersten Teil und/oder dem Kopfteil bringbar ist und/oder aus einem fixierenden Schnappeingriff mit dem ersten Teil und/oder dem Kopfteil bringbar ist, und zwar insbesondere nur mittels eines Lösewerkzeugs. Gerade bei der Ausbildung des Fixiermittels als Schnappmittel ist eine sehr einfache Montage des Sichteinstellmechanismus möglich. Um ein ungewolltes Lösen des Sichteinstellmechanismus bzw. der Einzelkomponenten relativ zueinander zu verhindern, ist optional ein Lösewerkzeug zum Zerlegen notwendig.

Optional ist zwischen dem ersten Teil und dem Kopfteil eine Einsetzführung, insbesondere mit einem Führungsmittel am ersten Teil und insbesondere in der Mulde, und einem komplementären Gegenführungsmittel am Kopfteil, vorgesehen, zum Führen des Kopfteils relativ zur Mulde beim Einsetzen in eine definierte Fixierposition. Eine solche Einsetzführung kann beispielsweise ein Vorsprung sein, der in der Mulde ausgeführt ist, und der in eine Vorsprungaufnahme am Kopfteil gleitend eingreift. Optional ist der Vorsprung so ausgebildet, dass er eine Vertikalverschiebbarkeit, also vertikal zu Verschwenkebene und/oder koaxial zur Einsatzrichtung, wie sie zuvor beschrieben wurde, erlaubt, jedoch keine Verlagerung orthogonal dazu und insbesondere in Richtung der Schwenkachsen As. Die Einsetzführung ist optional coaxial zur Achse Av ausgebildet und insbesondere verläuft diese Achse Av durch diese Einsetzführung. Eine solche Einsetzführung kann optional als Rotationssicherung ausgeführt sein, um eine Rotation des Kopfteils relativ zum ersten Teil zu unterbinden. Eine mögliche Ausführungsform ist hier beispielsweise eine komplementäre Ausbildung von Führungsmittel und Gegenführungsmittel mit einem Rotationshemmelement, dass die beiden mittel gegenseitig verzahnt. Als ein solches Rotationshemmelement kann beispielsweise das Führungsmittel wenigstens einen Vorsprung, beispielswiese eine Ecke, und/oder eine Vertiefung aufweisen, die rotationshemmend in eine komplementäre Vorsprungaufnahme eingreift bzw. einen komplementären Vorsprung umgreift.

Wie erwähnt sind optional das Kopfteil und die Mulde und/oder das Kopfteil und das Klemmteil und/oder die Mulde und das Klemmteil wenigstens in Bezug auf ihre jeweils gegenüberliegenden Wandungen wenigstens abschnittsweise als Rotationskörper mit einer gemeinsamen Rotationskörperachse Av ausgebildet. Optional ist es insbesondere in diesem Zusammenhang denkbar, dass das Fixiermittel versetzt zu dieser Rotationskörperachse das erste Teil mit dem Kopfteil verbindet. Auf diese Weise wird ebenfalls eine Rotationssicherung erzielt. Das Fixiermittel ist optional so ausgebildet, dass es eine Rotation des Kopfteils zur Mulde und/oder des Kopfteils zum Klemmteil und/oder der Mulde zum Klemmteil verhindert. Die Rotation bezieht sich hier wieder optional auf eine Drehung um die Vertikalachse Av.

Optional soll gelten, dass die hier beschriebenen Merkmale im montierten Zustand des Sichteinstellmechanismus gelten, außer dies ist anders beschrieben. Montierter Zustand bedeutet, dass die ersten und zweiten Teile über das Kopfteil und das Fixiermittel miteinander verbunden sind.

Wie bereits erwähnt, betrifft die Erfindung neben dem Sichteinstellmechanismus auch eine Spiegeleinheit mit einem solchen Sichteinstellmechanismus, wobei aus Redundanzgründen hier auf sämtliche zuvor beschriebenen Ausführungsformen dieses Sichteinstellmechanismus Bezug genommen wird. Sämtliche der hier beschriebenen Varianten können mit einer solchen Spiegeleinheit kombiniert werden.

Weitere Ausführungen der Erfindung ergeben sich aus den Unteransprüchen.

Im Folgenden wird die Erfindung anhand von einem Ausführungsbeispiel beschrieben, das durch die beiliegenden Zeichnungen näher erläutert wird. Hierbei zeigen:
Fig. 1 eine perspektivische Darstellung einer Ausführungsform eines erfindungsgemäßen Sichteinstellmechanismus;
Fig. 2 einen Querschnitt durch die Ausführungsform gemäß Fig. 2;
Fig. 3 eine Detaildarstellung des Querschnitts gemäß Fig. 2;
Fig. 4 einen weiteren Querschnitt durch die Ausführungsform gemäß Fig. 1;
Fig. 5 eine Detaildarstellung des Querschnitts gemäß Fig. 4;
Fig. 6 eine Explosionszeichnung der Ausführungsform gemäß Fig. 1,
Fig. 7 eine weitere Ausführungsform eines Kopfteils;
Fig. 8 eine weitere Ausführungsform eines Kopfteils; und
Fig. 9 eine weitere Ausführungsform eines Kopfteils.

Im Folgenden werden für gleiche und gleich wirkende Bauteile dieselben Bezugsziffern verwendet, wobei bisweilen Hochindizes ihre Anwendung finden können.

Wenn nicht anders definiert, haben alle hier verwendeten Termini (einschließlich technischer und wissenschaftlicher Termini) die gleiche Bedeutung, und insbesondere eine Bedeutung, wie sie allgemein von einem Durchschnittsfachmann auf diesem Gebiet verstanden wird, wenn sie im Zusammenhang mit der Beschreibung und den Zeichnungen interpretiert werden. Es versteht sich ferner, dass Termini, wie diejenigen die in allgemein verwendeten Wörterbüchern definiert sind, in Bezug auf das hier relevante technische Gebiet interpretiert werden, und nicht in einem idealisierten oder in einem übertrieben formalen Sinn, außer dies ist explizit so definiert. In bestimmten Fällen kann auf eine detaillierte Beschreibung allseits bekannter Vorrichtungen und Verfahren verzichtet werden, um eine Redundanz der Beschreibung zu vermeiden. Die Beschreibung bestimmter Ausführungsformen und die darin verwendete Terminologie soll die Erfindung nicht einschränken. Die Singularformen "ein", "der/die/das" mögen auch die Pluralformen mit einschließen, wenn es der Kontext nicht eindeutig anders nahelegt. Der Ausdruck "und/oder" schließt jegliche und alle Kombinationen eines oder mehrerer der zugehörigen aufgelisteten Gegenstände mit ein. Es versteht sich, dass die Begriffe "umfasst" und/oder "umfassend" das Vorhandensein genannter Merkmale angeben, jedoch das Vorhandensein oder das Hinzufügen eines oder mehrerer anderer Merkmale nicht ausschließen. Ferner versteht es sich, dass wenn ein bestimmter Schritt eines Verfahrens als einem anderen Schritt folgend angegeben wird, er direkt auf diesen anderen Schritt folgen kann oder einer oder mehrere Zwischenschritte durchgeführt werden können, bevor der bestimmte Schritt ausgeführt wird, wenn das nicht anders angegeben ist. In der gleichen Weise versteht es sich, dass wenn eine Verbindung zwischen Strukturen oder Komponenten beschrieben ist, diese Verbindung direkt oder über Zwischenstrukturen oder -komponenten erfolgen kann, außer es ist anderweitig spezifiziert. Auf den Offenbarungsgehalt aller Publikationen, Patentanmeldungen, Patente und anderer hier erwähnter Literatur wird in seiner Gänze verwiesen. Im Fall eines Konflikts gilt die vorliegende Spezifikation, einschließlich ihrer Definitionen.

Die Erfindung wird hier anhand der beiliegenden Zeichnungen beschrieben, in denen Ausführungsformen der Erfindung gezeigt sind. Die Erfindung kann jedoch auch in vielen verschiedenen Formen ausgeführt sein und sollte nicht so verstanden werden, dass sie auf die hier dargelegten Ausführungsformen beschränkt ist. Vielmehr sind die Ausführungsformen hier angegeben, damit die vorliegende Offenbarung ausführlich und vollständig ist und den Umfang der Erfindung dem Fachmann in vollständiger aber beispielhafter Weise darlegt. Die Beschreibung der beispielhaften Ausführungsformen soll im Zusammenhang mit den beiliegenden Zeichnungen gelesen werden, die als Teil der ganzen schriftlichen Beschreibung gelten sollen. In den Zeichnungen kann es vorkommen, dass die absoluten und relativen Größen von Systemen, Komponenten, Schichten und Bereichen aus Gründen der Deutlichkeit übertrieben dargestellt sind. Ausführungsformen können anhand schematischer und/oder querschnittsartiger Illustrationen, idealisierter Ausführungsformen und Zwischenstrukturen der Erfindung beschrieben sein. Relative Termini sowie auch ihre Ableitungen sollten so verstanden werden, dass sie sich auf die Ausrichtung beziehen, wie sie dort in der gerade besprochenen Zeichnung beschrieben oder gezeigt ist. Diese relativen Termini dienen der übersichtlicheren Beschreibung und erfordern nicht, dass das System in einer bestimmten Ausrichtung aufgebaut oder betrieben werden muss, außer es ist explizit anders angegeben. Beliebige der offenbarten Vorrichtungen oder Teile davon können zusammen kombiniert werden oder in weitere Teile aufgeteilt werden, wenn nicht spezifisch anders angegeben. Die bloße Tatsache, dass bestimmte Maßnahmen in voneinander verschiedenen Abschnitten oder Ansprüchen aufgeführt werden, soll nicht angeben, dass eine Kombination dieser Maßnahmen nicht vorteilhafterweise vorgenommen werden kann. Insbesondere sollen alle denkbaren Kombinationen der Ansprüche als inhärent offenbart betrachtet werden. In dieser Beschreibung sind Wörter wie "im Wesentlichen", "ungefähr" oder "im Allgemeinen/allgemein" dahingehend auszulegen, dass sie mindestens Abweichungen eines Maßes von 10 % oder weniger, vorzugsweise 5 % oder weniger, oder Abweichungen von einer Form beinhalten, die für einen Fachmann auf dem Gebiet noch in den Rahmen der betreffenden Definition fallen würden, außer dies ist anderweitig spezifiziert.

Aus Gründen der Klarheit und im Sinne einer stringenten Beschreibung werden Merkmale hier meist als ein Teil einer oder getrennter Ausführungsformen beschrieben; es versteht sich jedoch von selbst, dass der Umfang der Erfindung auch Ausführungsformen enthalten kann, die Kombinationen aller oder einiger der beschriebenen Merkmale aufweisen.

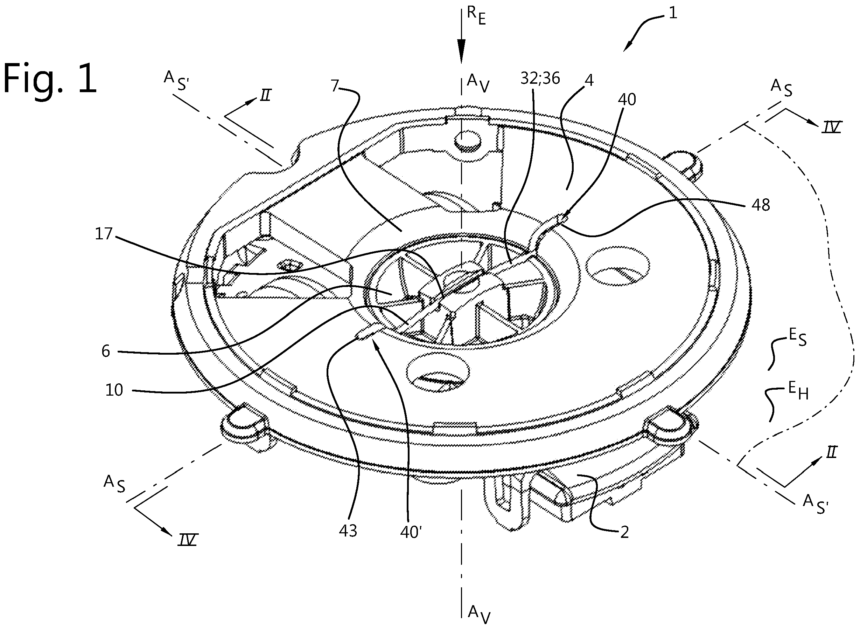

In den Fig. 1 bis 6 ist ein Sichteinstellmechanismus in unterschiedlichen Ansichten und Schnitten dargestellt. Im Folgenden werden verschiedene Ausführungsformen des erfindungsgemäßen Sichteinstellmechanismus anhand dieser Abbildungen erläutert, wobei die beschriebenen Ausführungsformen für sich alleine genommen, aber auch in Kombination mit anderen hier beschriebenen Ausführungsformen anwendbar sind.

Wie insbesondere in Fig. 1 dargestellt, umfasst der erfindungsgemäße Sichteinstellmechanismus ein erstes Teil 2, insbesondere ein Basisteil, und ein relativ dazu verschwenkbar angeordnetes zweites Teil 4, insbesondere ein Spiegelhalteteil. Die Verschwenkbarkeit ist hier optional um die dargestellten Schwenkachsen As gegeben, wobei die hier dargestellten Schwenkachsen eine Hauptebene E_{H} bzw. Schwenkebene Es definieren. Bei der hier optional vorgegebenen Kugelkopflagerung zwischen erstem Teil und zweitem Teil existieren weitere Schwenkachsen; das erste Teil ist bei dieser Ausführungsform um eine Vielzahl von Achsen innerhalb der Schwenkebene Es verschwenkbar. Orthogonal zu dieser Verschwenkebene Es verläuft optional eine Vertikalachse Av, die hier koaxial zu einer Einsetzrichtung R_{E} ausgebildet ist.

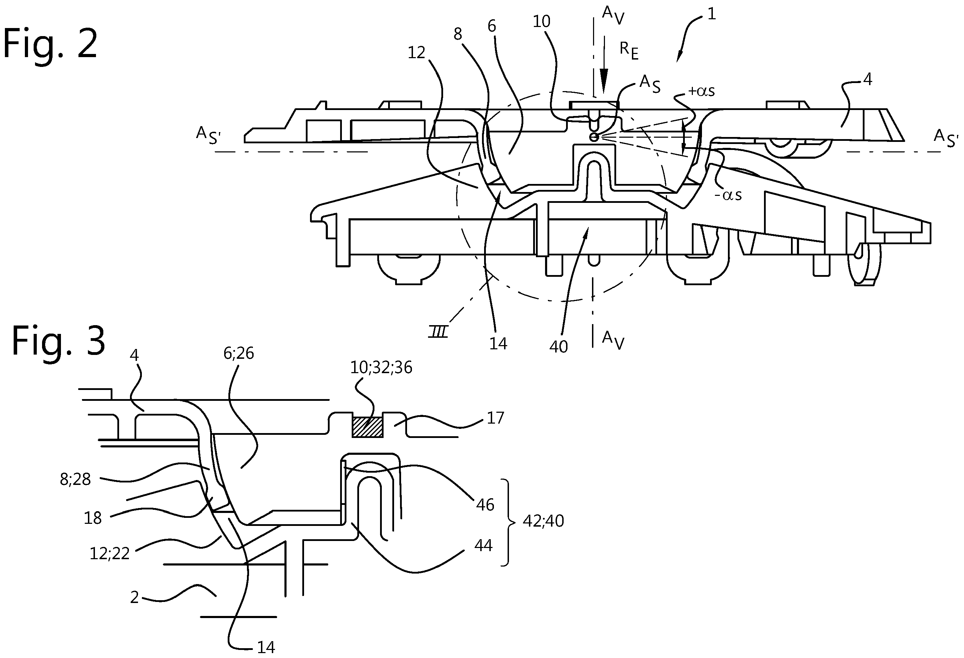

Das erste Teil 2 umfasst eine Mulde 12, in die ein zu dieser Mulde 12 wenigstens abschnittsweise komplementäres Kopfteil 6 unter Bildung wenigstens eines Klemmspalts 14 zwischen Mulde 12 und Kopfteil 6 einsetzbar ist. Dies ist insbesondere in den Fig. 2 bis 5 im Detail dargestellt. Das Kopfteil 6 ist relativ zum ersten Teil 2 über ein Fixiermittel 10 fixierbar.

Das zweite Teil 4 weist wenigstens ein Klemmteil 8 auf, das wenigstens abschnittsweise komplementär zum Klemmspalt 14 ausgebildet und in diesem derart anordbar ist, dass das zweite Teil 4 am ersten Teil 2 befestigt und relativ zu diesem verschwenkbar ist.

Wie in den Fig. 2 bis 5 dargestellt, kann bei einem Verschwenken des zweiten Teils 4 relativ zum ersten Teil 2 um wenigstens eine Achse As ein maximaler Verschwenkwinkel ± α_{S} eingenommen werden.

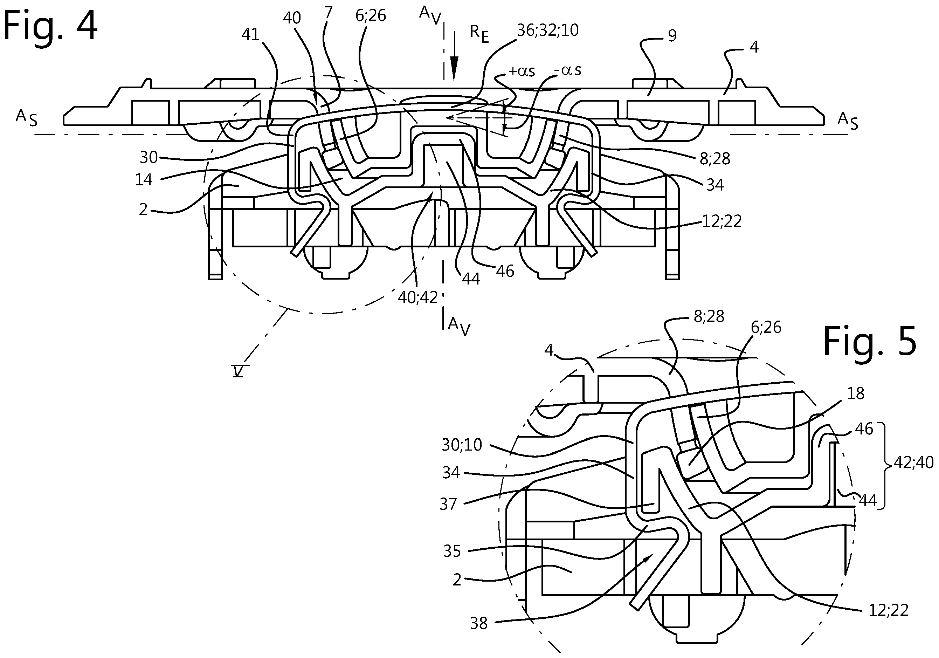

Das Fixiermittel 10 ist dabei derart ausgebildet, dass es das Kopfteil 6 in Richtung des ersten Teils 2 und insbesondere der Mulde 12 vorspannt. Dies ist im Detail in den Fig. 4 und 5 dargestellt. Das Fixiermittel umfasst dazu optional wenigstens ein Federzugmittel 30, das unter Aufbringen einer gegenseitigen Vorspannung am ersten Teil 2 und/oder am Kopfteil 6 festlegbar ist. Das Fixiermittel 10 kann insbesondere zwischen dem ersten Teil und dem Kopfteil 6 verlaufen, wobei es das zweite Teil 4 und insbesondere das Klemmteil 8 durchdringt. Dies ist beispielsweise in Fig. 1, 4, 5 und 6 im Detail dargestellt. Das zweite Teil 4 weist dazu optional wenigstens eine Durchdringungsöffnung 48 auf. Entsprechende Durchdringungsöffnungen 48' können auch im ersten Teil 2 vorgesehen sein.

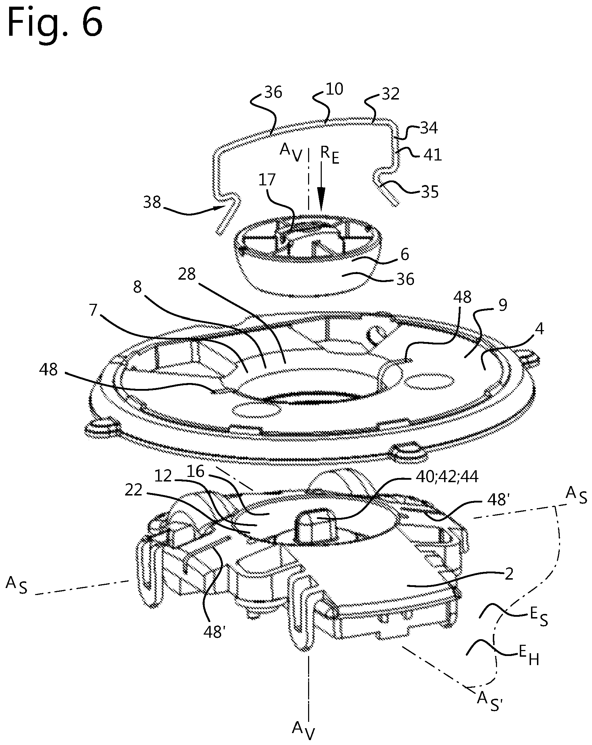

Das Fixiermittel 10 weist ein Bügelelement 32 auf, mit wenigstens zwei Bügelarmen 34 und einem insbesondere zwischen den Bügelarmen 34 ausgebildeten Bügelkopf 36. Wie insbesondere in den Fig. 4 bis 6 dargestellt, kann an Endbereichen 38 der Bügelarme 34 wenigstens ein Fixierelement 35 ausgebildet sein, das mit wenigstens einem Gegenfixierelement 37 am ersten Teil 2 festlegbar ist. Auch ist es denkbar, dass der Bügelkopf 36 insbesondere über entsprechende Fixierelemente und Gegenfixierelemente am Kopfteil 6 festlegbar ist. Ein solches Fixierelement am Kopfteil ist hier beispielsweise in den Fig. 1 und 6 mit dem Bezugszeichen 17 bezeichnet. Es ist optional derart ausgebildet, dass es das Fixierelement 10 am Kopfteil fixiert und insbesondere festklemmt.

Optional ist das Fixiermittel als Schnappmittel ausgebildet, das insbesondere werkzeuglos in einen fixierenden Schnappeingriff mit einem ersten Teil 2 und/oder dem Kopfteil 6 bringbar ist. Auch ist es denkbar, das Fixiermittel derart auszubilden, dass es aus einem fixierenden Schnappeingriff mit dem ersten Teil 2 und/oder dem Kopfteil 6 bringbar ist, und zwar insbesondere nur mittels eines entsprechenden Lösewerkzeugs. Ein solcher Schnappeingriff ist beispielsweise in den Fig. 4 und 5 dargestellt.

Wie insbesondere in den Fig. 1, 4 und 5 dargestellt, ist das Fixiermittel 10 zudem auch als eine Rotationssicherung ausgebildet, wobei es das zweite Teil 4 relativ zum ersten Teil 2 rotationsfixiert und insbesondere um die Vertikalachse Av rotationsfixiert bzw. um eine Achse Av, rotationsfixiert, um die das erste Teil, ohne montiertes Fixiermittel, relativ zum zweiten Teil rotierbar ist. Dazu ist wenigstens ein Rotationfixierelement 41 des Fixiermittels 10 exzentrisch bzw. in einem Abstand zur Vertikalachse Av angeordnet; in diesem Fall beispielsweise der wenigstens eine Bügelarm 34. Optional ist das Rotationfixierelement derart ausgebildet, dass es exzentrisch zur Vertikalachse Av zwischen dem zweiten Teil und dem ersten Teil verläuft und insbesondere das Klemmteil 8 durchdringt. Dies gilt optional auch für das als Federzugmittel 30. Optional ist das Fixiermittel am Kopfteil 6 festgelegt, wobei es von dort unter Durchdringung des Klemmteils 8 zum ersten Teil 2 verläuft und da festlegbar ausgebildet ist. Optional umfasst das zweite Teil 4 und insbesondere das Klemmteil einen Rotationsanschlag 43 (siehe Fig. 1), gegen den das Rotationsfixierelement 41 rotationsfixierend ansteht, um eine Rotation des zweiten Teils relativ zum ersten Teil zu verhindern.

Wie in den Fig. 2 bis 6 dargestellt, umfasst optional der Sichteinstellmechanismus wenigstens eine Einsetzführung 42 zum Führen des Kopfteils 6 relativ zur Mulde 12 beim Einsetzen in eine definierte Fixierposition, wie sie beispielsweise in Fig. 1 dargestellt ist. Diese Einsetzführung erlaubt insbesondere optional das Einsetzen des Kopfteils 6 in Einsetzrichtung R_{E} in die Mulde 12 des ersten Teils 2. Optional weist dazu die Einsetzführung 42 ein Führungsmittel 44 am ersten Teil 2, beispielsweise innerhalb der Mulde 12, auf, und ein komplementäres Gegenführungsmittel 46 am Kopfteil 6. Diese Gegenführungsmittel 46 ist hier als Aufnahme ausgebildet, die das Führungsmittel 44 am ersten Teil 2 derart aufnehmen kann, dass eine Vertikalführung entlang der Achse Av für das Kopfteil 6 bereitgestellt wird. Das Führungsmittel 44 und das Gegenführungsmittel 46 sind dabei optional derart ausgebildet, dass eine Bewegung in von dieser Vertikalachse Av abweichenden Richtung, beispielsweise in Richtungen coplanar zur Schwenkebene Es unterbunden wird.

Darüber hinaus ist die Einsetzführung 42 optional auch als Rotationssicherung ausführbar und insbesondere als eine Rotationssicherung, um das Kopfteil 6 relativ zum ersten Teil 2 rotationssichernd zu fixieren. Dies ist durch die hier gewählte Form des Führungsmittels und des komplementär ausgebildeten Gegenführungsmittels 46 mit gegenseitiger Rotationsverzahnung erreicht, die die gegenseitige Rotation unterbindet.

Wie insbesondere in den Fig. 2 bis 6 dargestellt, gilt optional, dass die Mulde 12 wenigstens abschnittsweise eine Muldenwandung 22 aufweist mit einer geometrischen Form, die der geometrischen Form der Wandung einer Kugelschicht einer ersten Kugel oder einer Schicht eines dergleichen rotationssymmetrischen ersten Volumenkörpers entspricht. Weiter gilt optional, dass das Kopfteil 6 wenigstens abschnittsweise eine Kopfteilwandung 26 aufweist, mit einer geometrische Form, die wenigstens abschnittsweise der geometrischen Form der Wandung einer Kugelschicht einer zweiten Kugel oder der Schicht eines dergleichen rotationssymmetrischen zweiten Volumenkörpers entspricht, und insbesondere einer zweiten Kugel oder eines dergleichen rotationssymmetrischen zweiten Volumenkörpers, der kleiner ist als die erste Kugel oder der rotationssymmetrische erste Volumenkörper wie er zuvor beschrieben wurde. Darüber hinaus gilt optional, dass das Klemmteil 8 wenigstens abschnittsweise eine Klemmteilwandung 28 aufweist, mit einer geometrischen Form, die wenigstens abschnittsweise der geometrischen Form der Wandung einer Kugelschicht einer dritten Kugel oder einer Schicht eines dergleichen rotationssymmetrischen dritten Volumenkörpers entspricht, und insbesondere einer dritten Kugel oder eines dergleichen rotationssymmetrischen dritten Volumenkörpers, der kleiner ist als die erste Kugel bzw. der rotationssymmetrische erste Volumenkörper und/oder größer ist als die zweite Kugel bzw. der rotationssymmetrische zweite Volumenkörper. In Bezug auf das insbesondere in diesem Absatz genannte wird auf die möglichen Ausführungformen, behandelt im einleitenden Teil dieses Textes verwiesen.

Die hier dargestellten Formen der Mulde 12, des Klemmteils 8 und des Kopfteils 6 sind insbesondere in perspektivischer Ansicht der Fig. 6 zu entnehmen. Hier wird auch deutlich, dass es möglich ist, die Bauteile 6, 8 und/oder 12 als Rotationskörper auszubilden und insbesondere als Rotationskörper mit einer gemeinsamen Rotationskörperachse Av, insbesondere im montierten Zustand.

Erkennbar ist weiter, und dies gilt sowohl für die Mulde 12, das Klemmteil 8 als auch für das Kopfteil 6, dass die jeweiligen Wandungen 22, 28, 26 vollumfänglich als um einen Winkel von 360° umlaufende Wandungen, also beispielsweise als Ringwandungen ausgeführt sein können. Es ist aber auch möglich, die einzelnen Wandungen auch lediglich als Ringsegmente bzw. Elemente mit Segmentwandungen auszuführen und hier optional auch eine Mehrzahl solcher Ringsegmente anzuordnen, die dann mit dem jeweils korrespondierenden komplementären Bauteil den Klemmspalt bilden bzw. Reibschluss bilden. Vorzugsweise ist dabei wenigstens eines der drei Bauteile 12, 8, 6 als vollumfänglicher Ring ausgebildet und die korrespondierenden Bauteile dann als Bauteile, die Segmentwandungen aufweisen.

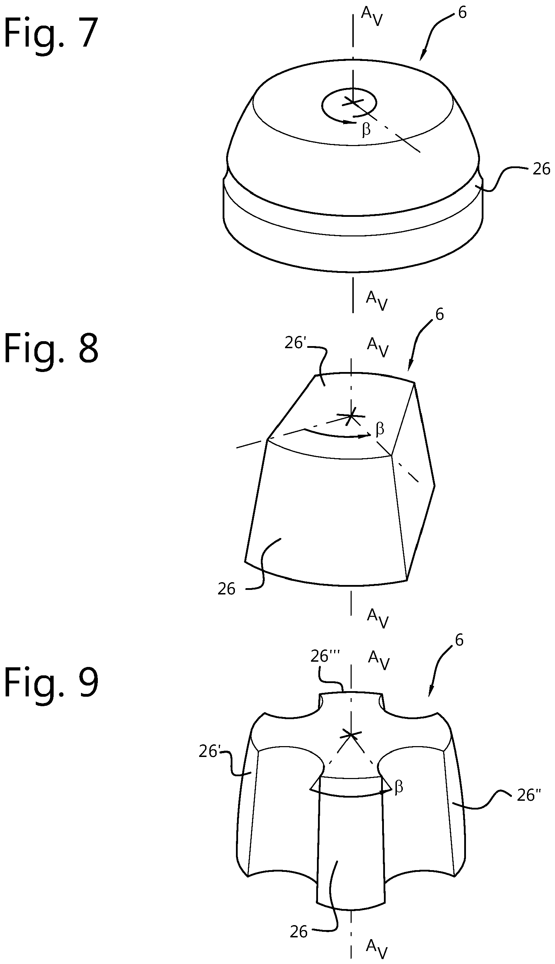

Beispiele hierfür sind in den Figuren 7 bis 9 dargestellt, die allesamt Ausführungsformen von Kopfteilen 6 zeigen. In Fig. 7 weist das dargestellte Kopfteil 6 eine Scheibenform mit einer um einen Winkel β von 360° umlaufenden Kopfteilwandung 26 auf. Optional ist hier eine beispielsweise ringförmig wenigstens teilweise umlaufende Nut vorgesehen. Fig. 8 zeigt dagegen eine Ausführungsform, bei der das Kopfteil 6 zwei Segmentwandungen 26 aufweist, von denen wenigstens eine um einen Winkel β von < 360° umläuft. Selbiges gilt für Fig. 9, wobei das hier dargestellte Kopfteil 6 mehr als 2, beispielsweise vier Segmentwandungen 26 aufweist, von denen wenigstens eine um einen Winkel β von < 360° umläuft. Diese Ausführungsformen der Wandungen können komplementär auch auf Wandungen des Klemmteils und/oder der Mulde übertragen werden.

Wie insbesondere in den Fig. 2 bis 5 dargestellt, weist optional das Klemmteil 8 wenigstens ein Reibelement 18 auf, das insbesondere in Form einer Verdickung und/oder eines Vorsprungs, insbesondere an einer Klemmteilwandung 28 des Klemmteils vorgesehen ist. Dieses Reibelement steht optional mit der Muldenwandung 22 und/oder der Kopfteilwandung 28 im Klemmspalt in Reibschluss. Es ist möglich, und dies wurde eingangs bereits erläutert, eine Mehrzahl solcher Reibelemente vorzusehen und insbesondere Reibelemente, die in Abhängigkeit des Schwenkwinkels mit der Kopfteilwandung 26 bzw. der Muldenwandung 22 in Reibschluss stehen bzw. treten.

Wie beschrieben, ist das Fixiermittel 10 derart ausgebildet, dass es das Kopfteil 6 in Richtung des ersten Teils 2 und insbesondere der Mulde 12 vorspannt. Auf diese Weise wird eine gleichbleibende Klemmkraft zwischen Klemmteil 8 und den von beiden Seiten anstehenden Wandungen 26, 22 vom Kopfteil 6 und Mulde 12 erreicht. Selbst bei Materialschwinden oder dergleichen Relaxation wird so eine verlässliche Reibschlusslagerung, und insbesondere eine Kugelkopflagerung, des zweiten Teils relativ zum ersten Teil erzielt. Dies ist insbesondere dann der Fall, wenn das Klemmteil 8 unter Reibschluss und insbesondere gleitend bewegbar im Klemmspalt 14 angeordnet ist.

Auch erkennbar ist in den Figuren, dass optional das erste Teil 2 und das Kopfteil 8, verbunden über das Fixiermittel 10, eine ortsfest miteinander verbundene Einheit bilden, in deren Klemmspalt 14 das Klemmteil 8 sicher gelagert ist.

Wie insbesondere in Fig. 6 dargestellt, weist die Mulde 12 eine Einsetzöffnung 16 auf, über die das Kopfteil 6 und/oder das Klemmteil 8 entlang einer Einsetzrichtung R_{E}, und insbesondere jeweils entlang der gleichen Einsetzrichtung, in die Mulde 12 einsetzbar und dort über das Fixiermittel 10 insbesondere gegen ein Entnehmen entgegen dieser Einsetzrichtung R_{E} fixierbar ist. Auch ist es denkbar, dass nach dem Lösen dieses Fixiermittels 10 diese "Stapelung" auflösbar und insbesondere das Kopfteil und/oder das Klemmteil aus der Mulde 12 entnehmbar sind.

Optional ist das Kopfteil entlang einer Einsetzrichtung R_{E}, die insbesondere orthogonal einer Schwenkebene Es verläuft und/oder orthogonal einer Hauptebene E_{H} der Mulde 12 verläuft, in die Mulde 12 einsetzbar. Dies ist beispielsweise in Fig. 6 dargestellt.

### Bezugszeichenliste

- 1: Sichteinstellmechanismus
- 2: erstes Teil
- 4: zweites Teil
- 6: Kopfteil
- 7: Kragenbereich
- 8: Klemmteil
- 9: Haltemittel
- 10: Fixiermittel
- 12: Mulde
- 14: Klemmspalt
- 16: Einsetzöffnung
- 17: Fixierelement
- 18: Reibelement
- 22: Muldenwandung
- 26: Kopfteilwandung
- 28: Klemmteilwandung
- 30: Federzugmittel
- 32: Bügelelement
- 34: Bügelarm
- 35: Fixierelement
- 36: Bügelkopf
- 37: Gegenfixierelement
- 40: Rotationssicherung
- 41: Rotationfixierelement
- 42: Einsetzführung
- 43: Rotationsanschlag
- 44: Führungsmittel
- 46: Führungsgegenmittel
- 48: Durchgangsöffnung
- R_{E}: Einsetzrichtung
- E_{H}: Hauptebene der Mulde
- Es: Schwenkebene
- Av: Vertikalachse
- As: Schwenkachse

## Patentansprüche

1. Sichteinstellmechanismus, umfassend ein erstes Teil (2), insbesondere ein Basisteil, und ein relativ dazu verschwenkbar angeordnetes zweites Teil (4), insbesondere ein Spiegelhalterteil, wobei
das erste Teil (2) eine Mulde (12) aufweist, in die ein zu dieser Mulde (12) wenigstens abschnittsweise komplementäres Kopfteil (6) unter Bildung wenigstens eines Klemmspaltes (14) zwischen Mulde (12) und Kopfteil (6) des Sichteinstellmechanismus einsetzbar und relativ zum ersten Teil (2) über ein Fixiermittel (10) des Sichteinstellmechanismus fixierbar ist und das zweite Teil (4) wenigstens ein Klemmteil (8) aufweist, das wenigstens abschnittsweise komplementär zum Klemmspalt (14) ausgebildet und in diesem derart anordbar ist, dass das zweite Teil (4) am ersten Teil (2) relativ zu diesem verschwenkbar befestigt ist,
das Fixiermittel (10) derart ausgebildet ist, dass es das Kopfteil (6) in Richtung des ersten Teils (2) und insbesondere der Mulde (12) vorspannt, wobei das Fixiermittel (10) eine Rotationssicherung (40) derart bildet, dass das zweite Teil (4) relativ zum ersten Teil (2) um eine Rotationsachse (A_{V}) orthogonal zu wenigstens einer Schwenkachse (A_{S}), um die das zweite Teil (4) relativ zum zweiten Teil (4) verschwenkbar ist, rotationsfixiert ist, wobei das Fixiermittel (10) wenigstens ein Rotationfixierelement (41) aufweist, das außerhalb dieser Rotationsachse Av gelagert ist, wobei das Fixiermittel (10) insbesondere zwischen dem ersten Teil und dem Kopfteil (6) verläuft und das zweite Teil (4) durchdringt,
**dadurch gekennzeichnet, dass**
das Fixiermittel (10) ein Bügelelement (32) aufweist, mit wenigstens zwei Bügelarmen (34) und einem Bügelkopf (36), wobei an den Bügelarmen (34) wenigstens ein Fixierelement (35) ausgebildet ist, das mit wenigstens einem Gegenfixierelement (37) am ersten Teil (2) festlegbar ist und/oder wobei der Bügelkopf (36) am Kopfteil (6) festlegbar ist, und wobei wenigstens ein Teil des Bügelelementes (32), insbesondere ein Bügelarm (34) das Rotationfixierelement (41) bildet.

2. Sichteinstellmechanismus nach Anspruch 1,
**dadurch gekennzeichnet, dass**
das Klemmteil (8) unter Reibschluss und insbesondere gleitend bewegbar im Klemmspalt (14) angeordnet ist.

3. Sichteinstellmechanismus nach einem der vorhergehenden Ansprüche,
**dadurch gekennzeichnet, dass**
die Mulde (12) eine Einsetzöffnung (16) aufweist, über die das Kopfteil (6) und/oder das Klemmteil (8) entlang einer Einsetzrichtung (R_{E}) in die Mulde (12) einsetzbar und dort über das Fixiermittel (10) insbesondere gegen ein Entnehmen entgegen der Einsetzrichtung (R_{E}) fixierbar ist und/oder nach dem Lösen des Fixiermittels (10) aus dieser entnehmbar ist.

4. Sichteinstellmechanismus nach einem der vorhergehenden Ansprüche,
**dadurch gekennzeichnet, dass**
das zweite Teil (4) um wenigstens eine Schwenkachse (A_{S}), die orthogonal zu einer Einsetzrichtung (R_{E}) verläuft, entlang derer das Kopfteil (6) in die Mulde (12) einsetzbar ist, relativ zum ersten Teil (2) verschwenkbar ist.

5. Sichteinstellmechanismus nach einem der vorhergehenden Ansprüche,
**dadurch gekennzeichnet, dass**
die Mulde (12) und das Kopfteil (6) derart komplementär zueinander ausgebildet sind, dass sie unter Zwischenlagern des Klemmteils (8) mit diesem eine Kugelkopflagerung bilden.

6. Sichteinstellmechanismus nach einem der vorhergehenden Ansprüche,
**dadurch gekennzeichnet, dass**
die Mulde (12) wenigstens abschnittsweise eine Muldenwandung (22) aufweist mit einer geometrischen Form, die der geometrischen Form der Wandung einer Kugelschicht einer ersten Kugel oder einer Schicht eines dergleichen rotationssymmetrischen ersten Volumenkörpers entspricht.

7. Sichteinstellmechanismus nach einem der vorhergehenden Ansprüche,
**dadurch gekennzeichnet, dass**
das Kopfteil (6) wenigstens abschnittsweise eine Kopfteilwandung (26) aufweist, mit einer geometrische Form, die wenigstens abschnittsweise der geometrischen Form der Wandung einer Kugelschicht einer zweiten Kugel oder der Schicht eines dergleichen rotationssymmetrischen zweiten Volumenkörpers entspricht, und insbesondere einer zweiten Kugel oder eines dergleichen rotationssymmetrischen zweiten Volumenkörpers, der kleiner ist als die erste Kugel oder der rotationssymmetrische erste Volumenkörper aus Anspruch 6.

8. Sichteinstellmechanismus nach einem der vorhergehenden Ansprüche,
**dadurch gekennzeichnet, dass**
das Klemmteil (8) wenigstens abschnittsweise eine Klemmteilwandung (28) aufweist, mit einer geometrischen Form, die wenigstens abschnittsweise der geometrischen Form der Wandung einer Kugelschicht einer dritten Kugel oder einer Schicht eines dergleichen rotationssymmetrischen dritten Volumenkörpers entspricht,
und insbesondere einer dritten Kugel oder eines dergleichen rotationssymmetrischen dritten Volumenkörpers, der kleiner ist als die erste Kugel bzw. der rotationssymmetrische erste Volumenkörper aus Anspruch 6 und/oder größer ist als die zweite Kugel bzw. der rotationssymmetrische zweite Volumenkörper aus Anspruch 7.

9. Sichteinstellmechanismus nach einem der vorhergehenden Ansprüche,
**dadurch gekennzeichnet, dass**
das Klemmteil (8) wenigstens ein Reibelement (18) aufweist, das insbesondere in Form einer Verdickung und/oder eines Vorsprunges insbesondere an der Klemmteilwandung (28) des Klemmteils (8) vorgesehen ist und mit einer Muldenwandung (22) und/oder einer Kopfteilwandung (26) im Klemmspalt (14) in Reibschluss steht.

10. Sichteinstellmechanismus nach einem der vorhergehenden Ansprüche,
**dadurch gekennzeichnet, dass**
das Fixiermittel (10) wenigstens ein Federzugmittel (30) aufweist, das unter Aufbringen einer gegenseitigen Vorspannung am ersten Teil (2) und am Kopfteil (6) festlegbar ist.

11. Sichteinstellmechanismus nach einem der vorhergehenden Ansprüche,
**dadurch gekennzeichnet, dass**
das Fixiermittel (10) das Klemmteil (8) durchdringt.

12. Sichteinstellmechanismus nach einem der vorhergehenden Ansprüche,
**dadurch gekennzeichnet , dass** wenigstens ein Fixierelement (35) an Endbereichen (38) der Bügelarme (34) ausgebildet ist.

13. Sichteinstellmechanismus nach einem der vorhergehenden Ansprüche,
**dadurch gekennzeichnet, dass**
das Fixiermittel (10) als Schnappmittel ausgebildet ist, das insbesondere werkzeuglos in einen fixierenden Schnappeingriff mit dem ersten Teil (2) und/oder dem Kopfteil (6) bringbar ist und/oder aus einem fixierenden Schnappeingriff mit dem ersten Teil (2) und/oder dem Kopfteil (6) bringbar ist, und zwar insbesondere nur mittels eines Lösewerkzeuges.

14. Sichteinstellmechanismus nach einem der vorhergehenden Ansprüche,
**dadurch gekennzeichnet, dass**
zwischen dem ersten Teil (2) und dem Kopfteil (6) eine Einsetzführung (42), insbesondere mit einem Führungsmittel (44) am ersten Teil (2) und insbesondere in der Mulde (12) und einem komplementären Gegenführungsmittel (46) am Kopfteil (6), vorgesehen ist zum Führen des Kopfteils (6) relativ zur Mulde (12) beim Einsetzten in eine definierte Fixierposition.

15. Sichteinstellmechanismus nach Anspruch 14
**dadurch gekennzeichnet, dass**
die Einsetzführung (42) als Rotationssicherung des Kopfteils (6) relativ zum ersten Teil (2) ausgebildet ist.

16. Sichteinstellmechanismus nach einem der vorhergehenden Ansprüche,
**dadurch gekennzeichnet, dass**
das Kopfteil (6) und die Mulde (12) und/oder das Kopfteil (6) und das Klemmteil (8) und/oder die Mulde (12) und das Klemmteil (8) wenigstens in Bezug auf ihre einander jeweils gegenüberliegenden Wandungen (22, 26, 28) wenigstens abschnittsweise als Rotationskörper mit einer gemeinsamen Rotationskörperachse (Av) ausgebildet sind, insbesondere wobei das Fixiermittel (10) versetzt zu dieser Rotationskörperachse (Av) das erste Teil (2) mit dem Kopfteil (6) verbindet.

17. Sichteinstellmechanismus nach einem der vorhergehenden Ansprüche,
**dadurch gekennzeichnet, dass**
das Klemmteil (8) wenigstens abschnittsweise als Ringelement ausgebildet ist, mit einem Kragenbereich (7), an dem wenigstens ein Haltemittel (9) zur Aufnahme wenigstens eines Spiegelelements ausgebildet ist.

18. Spiegeleinheit und insbesondere Seitenspiegel für ein Motorfahrzeug, umfassend einen Sichteinstellmechanismus (1) nach einem der vorhergehenden Ansprüche, wobei am zweiten Teil (4) wenigstens ein Spiegelelement angeordnet ist.

## Claims

1. Vision adjustment mechanism, comprising a first part (2), especially a base part, and a second part (4), especially a mirror holding part, arranged to be pivotable relative to the first part, wherein the first part (2) has a trough (12) into which a head part (6) that is at least partially complementary to said trough (12), can be inserted, forming at least one clamping gap (14) between the trough (12) and the head part (6) of the vision adjustment mechanism, and is fixable relative to the first part (2) by means of a fixation means (10) of the vision adjustment mechanism, and the second part (4) has at least one clamping part (8) which is formed in such a way that it is at least partially complementary to the clamping gap (14), and which can be arranged in such a way that the second part (4) is rotatably attached to the first part (2), the fixation means (10) is formed in such a way that it biases the head part (6) in the direction of the first part (2), and especially in the direction of the trough (12), wherein the fixation means (10) forms a rotation fixation means (40) in such a way that the second part (4) is rotatable relative to the first part (2) about a rotation axis (Av) which is orthogonal to at least one pivot axis (As), about the second part (4) relative to the second part (4), is fixed against rotation, wherein the fixation means (10) has at least one rotation fixation element (41) extending externally to the rotation axis Av, wherein the fixation means (10) especially extends between the first part and the head part (6), and penetrates the second part (4),
**characterized in that**
the fixation means (10) comprises a bracket element (32) having at least two bracket arms (34) and a bracket head (36), wherein on the bracket arms (34) at least one fixation element (35) is foreseen that can be fixed onto the first part (2) with at least one counter fixation element (37), and/or wherein the bracket head (36) can be fixed onto the head part (6), and wherein at least part of the bracket element (32), especially a bracket arm (34), forms the rotation fixation element (41).

2. Vision adjustment mechanism according to claim 1,
**characterized in that**
the fixation part (8) is frictionally arranged with and especially slidably movable in the clamping gap (14).

3. Vision adjustment mechanism according to any of the preceding claims,
**characterized in that**
the trough (12) has an insertion opening (16) via which at least the head part (6) and/or the clamping part (8) is or are insertable in an insertion direction (R_{E}) into the trough (12) and fixable **in that** position by means of the fixation means (10), especially against removal in a direction opposite to the insertion direction (R_{E}), and/or removable from the trough after loosening of the fixation means (10).

4. Vision adjustment mechanism according to any of the preceding claims,
**characterized in that**
the second part (4) is pivotable relative to the first part (2) about at least one pivot axis (A_{S}) extending orthogonally to an insertion direction (R_{E}) in which the head part (6) is insertable into the trough (12).

5. Vision adjustment mechanism according to any of the preceding claims,
**characterized in that**
the trough (12) and the head part (6) are formed to be complementary to each other, in such a way that by interposing the clamping part (8) they collectively form a spherical joint.

6. Vision adjustment mechanism according to any of the preceding claims,
**characterized in that**
the trough (12) at least partially has a trough sidewall (22) with a geometric shape that corresponds to the geometric shape of the sidewall of a spherical layer of a first sphere or a layer of a similar rotation-symmetrical first volume body.

7. Vision adjustment mechanism according to any of the preceding claims,
**characterized in that**
the head part (6) at least partially has a head part sidewall (26) with a geometric shape that at least partially corresponds to the geometric shape of the wall of a spherical layer of a second sphere or a layer of a similar rotation-symmetrical second volume body, and especially a second sphere or a similar rotation-symmetric second volume body that is smaller than the first sphere or the rotation-symmetric first volume body as mentioned in claim 6.

8. Vision adjustment mechanism according to any of the preceding claims,
**characterized in that**
the clamping part (8) at least partially has a clamping part sidewall (28) with a geometric form that at least partially corresponds to the geometric form of the sidewall of a spherical layer of a third sphere or a layer of a similar rotation-symmetric third volume body,
and especially a third sphere or a similar rotation-symmetric third volume body that is smaller than the first sphere or the rotation-symmetric first volume body as mentioned in claim 6 and/or that is larger than the second sphere or rotation-symmetric second volume body as mentioned in claim 7.

9. Vision adjustment mechanism according to any of the preceding claims,
**characterized in that**
the clamping part (8) comprises at least one friction element (18), especially on the clamping part sidewall (28) of the clamping part (8), especially in the form of a thickening and/or a protrusion, wherein the clamping part is in frictional engagement in the clamping gap (14) with a sidewall of the trough (22) and/or with a head part sidewall (26).

10. Vision adjustment mechanism according to any of the preceding claims,
**characterized in that**
the fixation means (10) at least has one tension spring means (30) that is fixable onto the first part (2) and onto the head part (6) while applying a mutual bias or prestress.

11. Vision adjustment mechanism according to any of the preceding claims,
**characterized in that**
the fixation means (10) penetrates the clamping part (8).

12. Vision adjustment mechanism according to any of the preceding claims,
**characterized in that**
at least one fixation element (35) is formed on the end regions (38) of the bracket arms (34).

13. Vision adjustment mechanism according to any of the preceding claims,
**characterized in that**
the fixation means (10) is formed as a snap-engagement means that especially can be brought into a snap-engagement with the first part (2) and/or with the head part (6), without the necessity to use a tool, and/or can be taken out of the snap-engagement with the first part (2) and/or with the head part (6), without the necessity to use a loosening tool.

14. Vision adjustment mechanism according to any of the preceding claims,
**characterized in that**
an insertion guide (42) is provided between the first part (2) and the head part (6), especially comprising a guiding means (44) which is located on the first part (2), and especially in the trough (12), and comprising a complementary counter guiding means (46) on the head part (6), for guiding the head part (6) relative to the trough (12) during insertion into a predefined fixation position.

15. Vision adjustment mechanism according to claim 14,
**characterized in that**
the insertion guide (42) is formed as a means for rotationally fixing the head part (6) relative to the first part (2).

16. Vision adjustment mechanism according to any of the preceding claims,
**characterized in that**
the head part (6) and the trough (12) and/or the head part (6) and the clamping part (8) and/or the trough (12) and the clamping part (8), at least in relation to their respective opposing sidewalls (22, 26, 28) are at least partially formed as rotation-symmetrical bodies with a common rotation axis (A_{V}), especially wherein the fixation means (10) connects the first part (2) to the head part (6) in a way that is offset from this common rotation axis (Av).

17. Vision adjustment mechanism according to any of the preceding claims,
**characterized in that**
the clamping part (8) is at least partially formed as an annular element, with a collar region (7) on which at least one holding means (9) is formed for receiving at least one mirror element.

18. Mirror unit, and especially side mirror for a motor vehicle, comprising a vision adjustment mechanism (1) according to any of the preceding claims, wherein at least one mirror element is arranged on the second part (4).

## Revendications

1. Mécanisme de réglage de la vue, comprenant une première partie (2), en particulier une partie de base, et une deuxième partie (4) disposée de manière pivotante par rapport à celle-ci, en particulier une partie de support de miroir, dans lequel
la première partie (2) présente un creux (12) dans lequel une partie tête (6) au moins en partie complémentaire de ce creux (12) peut être insérée avec formation d'au moins une fente de serrage (14) entre le creux (12) et la partie tête (6) du mécanisme de réglage de la vue et peut être fixée par rapport à la première partie (2) par l'intermédiaire d'un moyen de fixation (10) du mécanisme de réglage de la vue,
et
la deuxième partie (4) présente au moins une partie de serrage (8), qui est réalisée au moins en partie de manière complémentaire de la fente de serrage (14) et peut être disposée dans celle-ci, de telle sorte que la deuxième partie (4) est fixée sur la première partie (2) de manière à pouvoir pivoter par rapport à celle-ci,
le moyen de fixation (10) est réalisé de telle sorte qu'il précontraint la partie tête (6) en direction de la première partie (2) et en particulier du creux (12),
dans lequel
le moyen de fixation (10) forme un blocage en rotation (40), de telle sorte que la deuxième partie (4) est fixée en rotation par rapport à la première partie (2) autour d'un axe de rotation (A_{V}) perpendiculairement à au moins un axe de pivotement (A_{S}), autour duquel la deuxième partie (4) peut pivoter par rapport à la deuxième partie (4), dans lequel
le moyen de fixation (10) présente au moins un élément de fixation en rotation (41), qui est monté à l'extérieur de cet axe de rotation Av, dans lequel
le moyen de fixation (10) s'étend en particulier entre la première partie et la partie tête (6) et traverse la deuxième partie (4),
**caractérisé en ce que**
le moyen de fixation (10) présente un élément d'étrier (32), avec au moins deux bras d'étrier (34) et une tête d'étrier (36), dans lequel au moins un élément de fixation (35), qui peut être immobilisé avec au moins un élément de fixation homologue (37) sur la première partie (2), est réalisé sur les bras d'étrier (34) et/ou dans lequel la tête d'étrier (36) peut être immobilisée sur la partie tête (6), et dans lequel
au moins une partie de l'élément d'étrier (32), en particulier un bras d'étrier (34) forme l'élément de fixation en rotation (41).

2. Mécanisme de réglage de la vue selon la revendication 1,
**caractérisé en ce que**
la partie de serrage (8) est disposée dans la fente de serrage (14) avec accouplement par friction et en particulier de manière mobile avec glissement.

3. Mécanisme de réglage de la vue selon l'une quelconque des revendications précédentes,
**caractérisé en ce que**
le creux (12) présente une ouverture d'insertion (16), par l'intermédiaire de laquelle la partie tête (6) et/ou la partie de serrage (8) peut être insérée dans le creux (12) le long d'une direction d'insertion (R_{E}) et peut y est être fixée par l'intermédiaire du moyen de fixation (10) en particulier contre un retrait à l'encontre de la direction d'insertion (R_{E}) et/ou peut être retirée de celui-ci après la libération du moyen de fixation (10).

4. Mécanisme de réglage de la vue selon l'une quelconque des revendications précédentes,
**caractérisé en ce que**
la deuxième partie (4) peut pivoter par rapport à la première partie (2) autour d'au moins un axe de pivotement (A_{S}), qui s'étend perpendiculairement à une direction d'insertion (R_{E}) le long de laquelle la partie tête (6) peut être insérée dans le creux (12).

5. Mécanisme de réglage de la vue selon l'une quelconque des revendications précédentes,
**caractérisé en ce que**
le creux (12) et la partie tête (6) sont réalisés de manière complémentaire l'un de l'autre, de telle sorte qu'ils forment avec interposition de la partie de serrage (8) avec celle-ci un montage à tête sphérique.

6. Mécanisme de réglage de la vue selon l'une quelconque des revendications précédentes,
**caractérisé en ce que**
le creux (12) présente au moins en partie une paroi de creux (22) avec une forme géométrique, qui correspond à la forme géométrique de la paroi d'une couche sphérique d'une première sphère ou d'une couche d'un premier corps volumique à symétrie de rotation similaire.

7. Mécanisme de réglage de la vue selon l'une quelconque des revendications précédentes,
**caractérisé en ce que**
la partie tête (6) présente au moins en partie une paroi de partie tête (26), avec une forme géométrique, qui correspond au moins en partie à la forme géométrique de la paroi d'une couche sphérique d'une deuxième sphère ou de la couche d'un deuxième corps volumique à symétrie de rotation similaire, et en particulier d'une deuxième sphère ou d'un deuxième corps volumique à symétrie de rotation similaire, qui est plus petite que la première sphère ou le premier corps volumique à symétrie de rotation de la revendication 6.

8. Mécanisme de réglage de la vue selon l'une quelconque des revendications précédentes,
**caractérisé en ce que**
la partie de serrage (8) présente au moins en partie une paroi de partie de serrage (28), avec une forme géométrique qui correspond au moins en partie à la forme géométrique de la paroi d'une couche sphérique d'une troisième sphère ou d'une couche d'un troisième corps volumique à symétrie de rotation similaire,
et en particulier d'une troisième sphère ou d'un troisième corps volumique à symétrie de rotation similaire, qui est plus petite que la première sphère ou le premier corps volumique à symétrie de rotation de la revendication 6 et/ou est plus grande que la deuxième sphère ou le deuxième corps volumique à symétrie de rotation de la revendication 7.

9. Mécanisme de réglage de la vue selon l'une quelconque des revendications précédentes,
**caractérisé en ce que**
la partie de serrage (8) présente au moins un élément de friction (18), qui est prévu en particulier sous forme d'un épaississement et/ou d'une partie saillante en particulier sur la paroi de partie de serrage (28) de la partie de serrage (8) et est en accouplement par friction avec une paroi de creux (22) et/ou une paroi de partie tête (26) dans la fente de serrage (14).

10. Mécanisme de réglage de la vue selon l'une quelconque des revendications précédentes,
**caractérisé en ce que**
le moyen de fixation (10) présente au moins un moyen de traction à ressort (30), qui peut être immobilisé sur la première partie (2) et sur la partie tête (6) avec application d'une précontrainte mutuelle.

11. Mécanisme de réglage de la vue selon l'une quelconque des revendications précédentes,
**caractérisé en ce que**
le moyen de fixation (10) traverse la partie de serrage (8).

12. Mécanisme de réglage de la vue selon l'une quelconque des revendications précédentes,
**caractérisé en ce que**
au moins un élément de fixation (35) est réalisé sur les zones d'extrémité (38) des bras d'étrier (34).

13. Mécanisme de réglage de la vue selon l'une quelconque des revendications précédentes,
**caractérisé en ce que**
le moyen de fixation (10) est réalisé sous la forme d'un moyen à déclic, qui peut être amené en particulier sans outil dans un engagement à déclic de fixation avec la première partie (2) et/ou la partie tête (6) et/ou à partir d'un engagement à déclic de fixation avec la première partie (2) et/ou la partie tête (6), et ce en particulier uniquement au moyen d'un outil de libération.

14. Mécanisme de réglage de la vue selon l'une quelconque des revendications précédentes,
**caractérisé en ce que**
un guidage d'insertion (42), en particulier avec un moyen de guidage (44) sur la première partie (2) et en particulier dans le creux (12) et un moyen de guidage homologue (46) complémentaire sur la partie tête (6), est prévu entre la première partie (2) et la partie tête (6) pour le guidage de la partie tête (6) par rapport au creux (12) pour l'insertion dans une position de fixation définie.

15. Mécanisme de réglage de la vue selon la revendication 14
**caractérisé en ce que**
le guidage d'insertion (42) est réalisé sous la forme d'un blocage en rotation de la partie tête (6) par rapport à la première partie (2).

16. Mécanisme de réglage de la vue selon l'une quelconque des revendications précédentes,
**caractérisé en ce que**
la partie tête (6) et le creux (12) et/ou la partie tête (6) et la partie de serrage (8) et/ou le creux (12) et la partie de serrage (8) sont réalisés au moins en ce qui concerne leurs parois (22, 26, 28) respectivement opposées les unes aux autres au moins en partie sous la forme de corps de rotation avec un axe de corps de rotation (A_{V}) commun, en particulier dans lequel
le moyen de fixation (10) relie la première partie (2) à la partie tête (6) de manière décalée de cet axe de corps de rotation (A_{V}).

17. Mécanisme de réglage de la vue selon l'une quelconque des revendications précédentes,
**caractérisé en ce que**
la partie de serrage (8) est réalisée au moins en partie sous la forme d'un élément annulaire, avec une zone de collerette (7) sur laquelle est réalisé au moins un moyen de retenue (9) pour la réception d'au moins un élément de miroir.

18. Unité de miroir et en particulier rétroviseur latéral pour un véhicule à moteur, comprenant un mécanisme de réglage de la vue (1) selon l'une quelconque des revendications précédentes, dans lequel au moins un élément de miroir est disposé sur la deuxième partie (4) .
